# FASCICULE DE BREVET EUROPEEN

(11) **EP 2 239 126 B1**
(45) Date de publication et mention de la délivrance du brevet: **26.10.2011**
(21) Numéro de dépôt: 10158369.8
(22) Date de dépôt: 30.03.2010
(51) Int. Cl.: B29C 47/12, B29C 49/00, F16L 11/11

(54) **Coquille pour la fabrication par dépression de conduits annelés, conduit annelé et le procédé**
Vakuumformwerkzeug zur Herstellung eines Wellrohres, das hergestelle Rohr und Verfahren
Mould for vacuum moulding a corrugated pipe, manufactured pipe and method

(30) Priorité: 07.04.2009 FR 0952259
(43) Date de publication de la demande: 13.10.2010
(73) Titulaire: Corelco SAS, 01570 Manziat (FR)
(72) Inventeur: Courant, Alain, 01190 Chavannes sur Reyssouze (FR); Vallée, Claude, 01570 Manziat (FR)
(74) Mandataire: Tetaz, Franck Claude Edouard

(56) Documents cités:
- EP-A2- 0 435 446
- EP-A2- 0 563 575
- DE-U1- 20 116 058
- US-A- 4 248 459
- US-A- 6 142 188
- US-A1- 2004 007 278

## Description

### DOMAINE DE L'INVENTION

La présente invention concerne une coquille pour la fabrication par dépression de conduits annelés, et les conduits annelés fabriqués au moyen d'une telle coquille.

US 2004/007278A1, US4248459A et US6142188A montrent des exemples de:
- Coquilles pour la fabrication par dépression d'un conduit annelé dans une installation de formage comprenant deux chaînes sans fin de coquilles et un circuit de vide, ladite coquille présentant une empreinte pour le formage d'une moitié dudit conduit, ledit conduit présentant un diamètre extérieur inférieur ou égal à 40 mm et/ou les annelures présentant une largeur inférieure ou égale à 3 mm,
- Conduits annelés formés par dépression présentant un diamètre extérieur inférieur ou égal à 40 mm et/ou des annelures d'une largeur inférieure ou égale à 3 mm, et
- Procédés de fabrication par dépression d'un conduit annelé présentant un diamètre extérieur inférieur ou égal à 40 mm et/ou des annelures d'une largeur inférieure ou égale à 3 mm.

DE20116058U1, EP0563575A2 et EP0435446A2 montrent des exemples de coquilles, conduits de gros diamètre et leur fabrication, où
- l'empreinte comporte, par annelure, deux fentes d'aspiration reliées au circuit de vide et situées en-deçà du sommet de l'annelure,
- la surface extérieure de chaque annelure présente deux traces correspondant chacune à une fente d'aspiration et situées en-deçà du sommet de l'annelure, et
- on utilise, dans une installation comportant deux chaînes sans fin de coquilles et un circuit de vide, des coquilles.

### ARRIERE PLAN DE L'INVENTION

Pour la fabrication de conduits annelés de petits diamètres (c'est-à-dire présentant un diamètre extérieur inférieur ou égal à 40 mm), on utilise une installation de formage par dépression comprenant, en sortie d'une extrudeuse, deux chaînes sans fin de coquilles dans laquelle chaque coquille porte l'empreinte de la moitié du conduit.

Le formage par dépression est notamment utilisé pour former des gaines annelées pré-tubées ou pré-filées, c'est-à-dire des gaines dans lesquelles on insère, en même temps qu'elles sont formées, un tube ou un ou plusieurs câbles. De telles gaines trouvent notamment application dans le domaine de l'électricité...

Après formage, le conduit est généralement enroulé sous forme de bobines.

Les conduits annelés de petit diamètre présentent des annelures relativement étroites, c'est-à-dire d'une largeur inférieure ou égale à 3 mm, par exemple d'une largeur de l'ordre de 2,5 mm.

Par largeur de l'annelure, on entend la largeur du sommet de celle-ci, c'est-à-dire la longueur du sommet du trapèze dans laquelle est inscrite l'annelure.

La largeur minimale de l'annelure dépend des contraintes spécifiques à la réalisation du conduit considéré.

Pour favoriser le placage de la paraison dans l'empreinte, et notamment au fond de la partie annelée, on ménage, au fond de chaque empreinte d'annelure, une fente d'aspiration reliée au circuit de vide.

On garantit ainsi que les annelures du conduit obtenu présentent le profil souhaité.

Toutefois, il a été constaté qu'au niveau de la fente, c'est-à-dire au sommet des annelures, il se forme une légère aspérité dont la grosseur est fonction de la fluidité de la matière extrudée. En effet, plus la matière est fluide, plus elle peut s'infiltrer dans la fente et former une aspérité.

Cette aspérité est agressive pour l'utilisateur du conduit, notamment lorsqu'il le débobine de manière prolongée en le faisant glisser entre ses mains.

Une solution envisageable pour atténuer le relief de l'aspérité serait de travailler avec des matières de viscosité plus élevée, de sorte que la matière ne soit pas susceptible de s'infiltrer dans la fente d'aspiration.

Toutefois, cette solution s'opérerait au détriment du respect du profil des annelures, puisque la matière se prêterait plus difficilement au formage des annelures.

On pourrait également envisager d'influer sur la valeur de la dépression, puisqu'une aspiration moins forte permettrait de réduire la quantité de matière s'infiltrant dans la fente.

Toutefois, il est nécessaire de maintenir une certaine dépression pour former correctement les annelures.

Il est donc difficile d'ajuster la valeur de la dépression pour répondre à ces deux contraintes.

La présente invention a donc pour but d'améliorer le formage par dépression des conduits annelés de petit diamètre, en supprimant toute aspérité susceptible d'irriter l'utilisateur. L'invention vise donc à obtenir des conduits annelés de petit diamètre et/ou présentant des annelures de faible largeur (moins de 3 mm) sur lesquels la trace liée à la fente d'aspiration n'est pas sensible au toucher par l'utilisateur.

Un autre but de l'invention est de concevoir un outillage pour former de tels conduits qui soit robuste et fiable.

Un autre objectif de l'invention est encore de permettre le formage de conduits annelés quel que soit le matériau souhaité.

### BREVE DESCRIPTION DE L'INVENTION

Conformément à l'invention, il est proposé une coquille pour la fabrication par dépression d'un conduit annelé dans une installation de formage comprenant deux chaînes sans fin de coquilles et un circuit de vide, ladite coquille présentant une empreinte pour le formage d'une moitié dudit conduit, ledit conduit présentant un diamètre extérieur inférieur ou égal à 40 mm et/ou les annelures présentant une largeur inférieure ou égale à 3 mm, ladite coquille étant caractérisée en ce que l'empreinte comporte, par annelure, deux fentes d'aspiration reliées au circuit de vide et situées en-deçà du sommet de l'annelure, c'est-à-dire à une distance, par rapport à l'axe du conduit, inférieure au diamètre extérieur de l'annelure.

De préférence, les fentes d'aspiration sont disposées de part et d'autre du plan de symétrie de l'annelure passant par le sommet de celle-ci.

Selon un mode préféré de réalisation de l'invention, les deux fentes d'aspiration débouchent dans deux rainures longitudinales borgnes situées de part et d'autre de l'empreinte, lesdites rainures borgnes débouchant dans une gorge située sur une face transversale de la coquille et reliée au circuit de vide.

Un autre objet de l'invention concerne un conduit annelé formé par dépression présentant un diamètre extérieur inférieur ou égal à 40 mm et/ou des annelures d'une largeur inférieure ou égale à 3 mm, ledit conduit étant caractérisé en ce que la surface extérieure de chaque annelure présente deux traces correspondant chacune à une fente d'aspiration et situées en-deçà du sommet de l'annelure.

De préférence, les traces sont situées de part et d'autre du sommet de l'annelure.

De manière particulièrement avantageuse, ledit conduit annelé est en PVC.

Selon un mode préféré de réalisation, le conduit annelé présente une simple paroi annelée, et il peut renfermer au moins un tube ou un câble (conduit pré-tubé ou pré-filé).

L'invention concerne en outre un procédé de fabrication par dépression d'un conduit annelé présentant un diamètre extérieur inférieur ou égal à 40 mm et/ou des annelures d'une largeur inférieure ou égale à 3 mm, ledit procédé étant caractérisé en ce que l'on utilise, dans une installation comportant deux chaînes sans fin de coquilles et un circuit de vide, des coquilles telles que décrites plus haut.

De manière particulièrement avantageuse, lors de la fabrication dudit conduit annelé, on insère dans celui-ci au moins un tube ou un câble.

### BREVE DESCRIPTION DES DESSINS

D'autres caractéristiques et avantages de l'invention ressortiront de la description détaillée qui va suivre, en référence aux dessins annexés sur lesquels :
- les figures 1 et 2 sont des vues en perspective d'une coquille conforme à l'invention ;
- la figure 3 présente des vues de face et de côté de ladite coquille ;
- les figures 4A et 4B illustrent respectivement, de manière grossie, le profil extérieur d'un conduit annelé formé par dépression conformément à l'art antérieur et le profil extérieur d'un conduit annelé formé par dépression conformément à l'invention.

### DESCRIPTION DETAILLEE DE L'INVENTION

L'installation de formage par dépression de conduits annelés est connue et ne sera donc pas décrite en détail.

Une telle installation est par exemple décrite dans le brevet FR 2 748 417 au nom de la Demanderesse.

L'installation comporte deux chaînes sans fin de coquilles généralement prismatiques, articulées entre elles et se faisant face par paires. Elle comporte par ailleurs un circuit de vide permettant de générer une dépression à l'intérieur des coquilles.

Cette installation est disposée à la sortie d'une extrudeuse qui extrude une paraison en matériau synthétique, typiquement un thermoplastique.

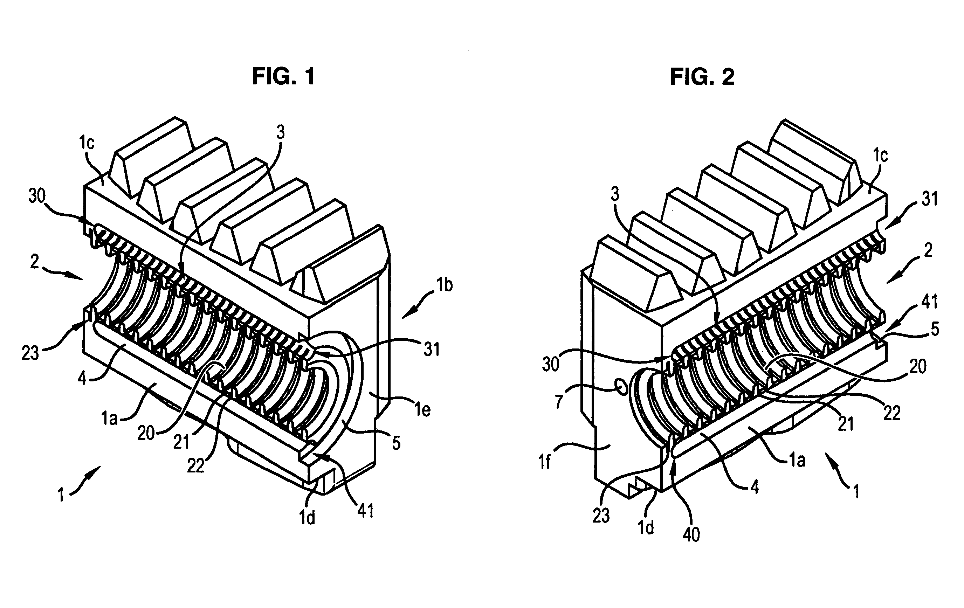

En référence à la figure 1, chaque coquille 1 présente sur l'une de ses faces longitudinales, dite « face avant » 1a une empreinte 2 dans laquelle sont formées les annelures 20. La face 1b opposée à la face avant 1a est dite « face dorsale ».

Les deux autres faces longitudinales 1c et 1d (c'est-à-dire parallèles à la direction de déplacement de la paraison et des coquilles) de la coquille sont désignées par les termes de « face supérieure » et « face inférieure ».

La face avant 1a d'au moins une des coquilles de chaque paire comporte deux rainures longitudinales 3 et 4 situées de part et d'autre de l'empreinte 2.

De préférence, chacune de ces rainures 3 et 4 est borgne c'est-à-dire qu'elle est fermée à l'une de ses extrémités 30, 40 et qu'elle débouche, à son autre extrémité 31, 41, sur une face transversale 1e de la coquille.

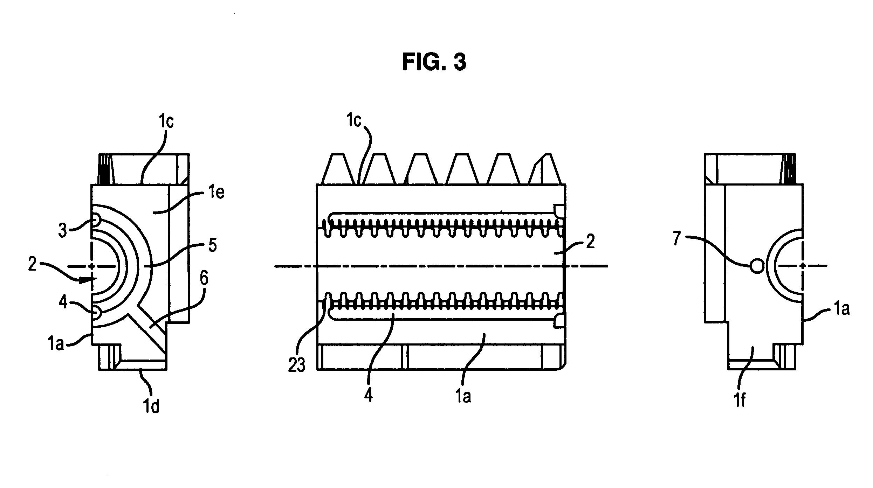

Les rainures borgnes 3 et 4 sont reliées au circuit de vide par l'intermédiaire d'une gorge 5, par exemple de forme semi-circulaire, ménagée sur la face transversale 1 e. La gorge 5 est reliée au circuit de vide par une rainure 6 (non représentée sur les figures 1 et 2 mais illustrée à la figure 3).

Comme expliqué dans le brevet FR 2 748 417, cet agencement permet d'assurer un bon placage des coquilles entre elles et par conséquent d'éviter des fuites de vide au niveau du plan de joint.

Toutefois, il va de soi que le circuit de vide de la coquille illustré ici n'est qu'un exemple préféré parmi de nombreuses variantes. En effet, d'autres moyens pour appliquer la dépression et plaquer les coquilles peuvent être employés sans pour autant sortir du cadre de la présente invention. Ainsi, par exemple, les rainures longitudinales peuvent être borgnes des deux côtés et reliées au circuit de vide par des perçages à l'intérieur de la coquille au lieu d'une rainure sur une face transversale.

Dans l'empreinte 2, deux fentes d'aspiration 21 et 22 sont formées au fond de chaque annelure et débouchent, à chacune de leurs extrémités, dans les rainures borgnes 3 et 4.

La largeur des fentes 21 et 22 est déterminée par l'homme du métier en fonction du matériau du conduit.

Les deux fentes d'aspiration 21 et 22 sont, par exemple, disposées à égale distance de part et d'autre du plan de symétrie transversal de chaque annelure.

Sur les figures présentées ici, le profil des annelures est sensiblement carré, et les fentes d'aspiration sont situées dans les coins des annelures, c'est-à-dire dans le rayon, voire dans la dépouille des annelures.

Dans le cas d'annelures au profil plus arrondi, on place les fentes d'aspiration de part et d'autre du sommet de l'annelure.

Ainsi, dans tous les cas, même si de légères aspérités se forment au niveau de ces fentes, elles se trouvent en retrait par rapport au sommet de l'annelure et ne risquent pas de blesser l'opérateur lors de la manipulation du conduit.

On peut ainsi utiliser une matière fluide et/ou une dépression élevée sans que cela ne se traduise par des aspérités inconfortables pour l'utilisateur.

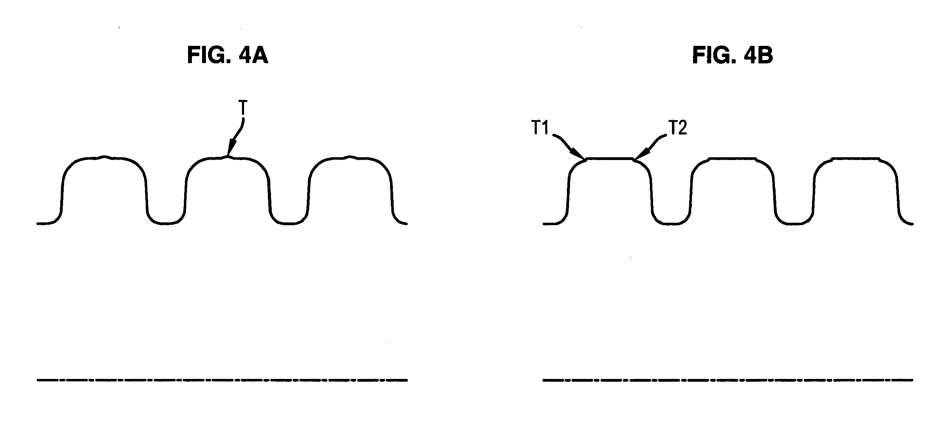

En référence à la figure 4B, qui illustre le profil de la surface extérieure d'un demi-conduit, le conduit annelé ainsi formé se distingue visuellement d'un conduit formé par soufflage par le fait qu'il comporte, sur chaque annelure, deux traces T1, T2 correspondant aux fentes d'aspiration des coquilles.

Au contraire, un conduit formé par soufflage ne comporte pas de trace au niveau des annelures.

A titre de comparaison, la figure 4A illustre le profil extérieur d'un conduit annelé formé par dépression au moyen des coquilles de l'art antérieur : on observe une trace T située au sommet de l'annelure.

On précise que pour la fabrication de conduits annelés de type double paroi et de gros diamètres (c'est-à-dire présentant typiquement un diamètre extérieur supérieur à 40 mm), il est connu de placer deux fentes d'aspiration de part et d'autre du sommet de chaque annelure.

Toutefois, sur ces conduits particuliers, cette double fente est nécessaire en raison de la largeur importante (typiquement, de l'ordre de 8 mm) des annelures. En effet, une fente d'aspiration unique serait insuffisante pour permettre un bon placage de la paraison dans chaque empreinte d'annelure.

Un problème particulier se pose pour l'alimentation en vide de la dernière annelure, c'est-à-dire celle située à l'extrémité de la coquille opposée à la face transversale 1e dans laquelle débouchent les rainures longitudinales borgnes 3 et 4.

En effet, dans la mesure où les rainures longitudinales 3 et 4 sont borgnes, il n'y a pas de rainure longitudinale en face de la dernière annelure.

Pour relier la fente d'aspiration de cette empreinte au circuit de vide, il serait donc nécessaire de créer deux rainures longitudinales borgnes, alignées avec les rainures borgnes 3 et 4, de part et d'autre de la dernière annelure. Ces rainures borgnes supplémentaires présenteraient une extrémité borgne située à proximité de l'extrémité borgne 30, 40 des rainures 3 et 4 et déboucheraient, à leur extrémité opposée, sur la face transversale 1f opposée à la face 1e de la coquille. De la sorte, ces rainures seraient reliées au circuit de vide par l'intermédiaire de la gorge 5 de la face transversale 1e de la coquille adjacente.

Or, il serait très délicat d'usiner ces rainures borgnes sur une longueur aussi courte, en veillant à ce qu'elles ne débouchent pas dans les rainures borgnes 3 et 4.

La solution retenue par la Demanderesse consiste à former une unique fente d'aspiration 22 dans la dernière annelure et à l'alimenter par un perçage 7 situé sur la face transversale 1f.

On précise que, sur la figure 2, un seul perçage 7 est représenté, mais il est bien sûr possible de disposer plusieurs perçages disposés sur un arc de cercle entourant l'empreinte.

Le (ou les) perçage(s) 7 est alimenté en vide par la gorge 5 située sur la face transversale 1 e de la coquille adjacente.

Pour cette dernière annelure, la deuxième fente est obtenue lors de la mise en contact de la face 1f de la coquille avec la face 1e de la coquille adjacente, l'empreinte de celle-ci étant en léger retrait par rapport à la face 1e. Cette deuxième fente est alors alimentée en vide par les rainures longitudinales borgnes 3 et 4 de l'empreinte adjacente.

Les conduits peuvent être réalisés en tout matériau synthétique habituellement utilisé dans les applications visées, et notamment les matériaux appartenant aux familles des polyoléfines (polyéthylène, polypropylène...) et des polyamides.

La Demanderesse a par ailleurs constaté que, de manière inattendue, les coquilles qui viennent d'être décrites permettent de former par dépression des conduits annelés en PVC de petit diamètre.

En effet, les conduits annelés de gros diamètres et réalisés en double ou triple paroi PVC, existent et sont employés notamment dans le domaine de l'assainissement.

En revanche, pour former des conduits annelés de petit diamètre en PVC, il n'était possible que de procéder par soufflage et les tentatives de former de tels conduits par dépression au moyen des coquilles connues présentant une fente d'aspiration au sommet de l'annelure avaient échoué.

Le PVC est en effet une matière très pâteuse et raide, qui se prête difficilement au formage.

L'invention permet donc la fabrication de conduits annelés en PVC par dépression, ce qui ouvre la possibilité d'obtenir des gaines annelées pré-tubées ou pré-filées en PVC.

On précise enfin que l'invention n'est pas limitée à des conduits annelés présentant une paroi constituée d'un matériau unique, mais qu'elle s'applique également à la fabrication de conduits annelés à simple paroi dont la paroi se compose d'une pluralité de couches de matériaux différents.

## Revendications

1. Coquille (1) pour la fabrication par dépression d'un conduit annelé dans une installation de formage comprenant deux chaînes sans fin de coquilles et un circuit de vide, ladite coquille (1) présentant une empreinte (2) pour le formage d'une moitié dudit conduit, ledit conduit présentant un diamètre extérieur inférieur ou égal à 40 mm et/ou les annelures présentant une largeur inférieure ou égale à 3 mm, **caractérisée en ce que** l'empreinte (2) comporte, par annelure (20), deux fentes d'aspiration (21, 22) reliées au circuit de vide et situées en-deçà du sommet de l'annelure.

2. Coquille (1) selon la revendication 1, **caractérisée en ce que** les fentes d'aspiration (21, 22) sont disposées de part et d'autre du plan de symétrie de l'annelure (20).

3. Coquille selon l'une des revendications 1 ou 2, **caractérisé en ce que** les deux fentes d'aspiration (21, 22) débouchent dans deux rainures longitudinales borgnes (3, 4) situées de part et d'autre de l'empreinte (2), lesdites rainures borgnes débouchant dans une gorge (5) située sur une face transversale (1e) de la coquille (1).

4. Conduit annelé formé par dépression présentant un diamètre extérieur inférieur ou égal à 40 mm et/ou des annelures d'une largeur inférieure ou égale à 3 mm, **caractérisé en ce que** la surface extérieure de chaque annelure présente deux traces (T1, T2) correspondant chacune à une fente d'aspiration et situées en-deçà du sommet de l'annelure.

5. Conduit annelé selon la revendication 4, **caractérisé en ce que** les traces (T1, T2) sont situées de part et d'autre du sommet de l'annelure.

6. Conduit annelé selon l'une des revendications 4 ou 5, **caractérisé en ce qu'**il comporte une simple paroi.

7. Conduit annelé selon l'une des revendications 4 à 6, **caractérisé en ce qu'**il est en PVC.

8. Conduit annelé selon l'une des revendications 4 à 7, **caractérisé en ce qu'**il renferme au moins un câble ou un tube.

9. Procédé de fabrication par dépression d'un conduit annelé présentant un diamètre extérieur inférieur ou égal à 40 mm et/ou des annelures d'une largeur inférieure ou égale à 3 mm, **caractérisé en ce que** l'on utilise, dans une installation comportant deux chaînes sans fin de coquilles et un circuit de vide, des coquilles selon l'une des revendications 1 à 3.

10. Procédé selon la revendication 9, **caractérisé en ce que**, lors de la fabrication dudit conduit annelé, on insère dans celui-ci au moins un tube ou un câble.

## Claims

1. A mould (1) for the vacuum moulding of a corrugated pipe in a shaping installation including two endless mould chains and a vacuum circuit, where said mould (1) has a recess (2) for shaping one half of said pipe, and where said pipe has an external diameter less than or equal to 40 mm and/or the corrugations have a width less than or equal to 3 mm, **characterised in that** the recess (2) includes, for each corrugation (20), two suction slits (21, 22) connected to the vacuum circuit and located beneath the top of the corrugation.

2. A mould (1) according to claim 1, **characterised in that** the suction slits (21, 22) are positioned either side of the plane of symmetry of the corrugation (20).

3. A mould according to either of the claims 1 or 2, **characterised in that** the two suction slits (21, 22) open up into two blind lengthways grooves (3, 4) located either side of the recess (2), where said blind grooves open into a channel (5) located on a transverse face (1e) of the mould (1).

4. A vacuum-shaped corrugated pipe having an external diameter less than or equal to 40 mm and/or corrugations of a width less than or equal to 3 mm, **characterised in that** the outer surface of each corrugation has two marks (T1, T2), each corresponding to a suction slit and located beneath the top of the corrugation.

5. A corrugated pipe according to claim 4, **characterised in that** the marks (T1, T2) are located either side of the top of the corrugation.

6. A corrugated pipe according to either of the claims 4 or 5, **characterised in that** it has a single wall.

7. A corrugated pipe according to one of the claims 4 to 6, **characterised in that** it is made of PVC.

8. A corrugated pipe according to one of the claims 4 to 7, **characterised in that** it encloses at least one cable or one tube.

9. A method of vacuum moulding of a corrugated pipe having an external diameter less than or equal to 40 mm and/or corrugations of a width less than or equal to 3 mm, **characterised in that**, in an installation including two endless chains of moulds and a vacuum circuit, moulds according to one of claims 1 to 3 are used.

10. A method according to claim 9, **characterised in that**, in the course of the manufacture of the said corrugated pipe, at least one tube or one cable is inserted into it.

## Patentansprüche

1. Kokille (1) zur Herstellung eines Wellrohrs unter Druck in einer Formvorrichtung, welche zwei Kokillen-Endlosketten und eine Vakuumleitung umfasst, wobei die Kokille (1) eine Vertiefung (2) zur Formung einer Hälfte des Rohrs aufweist, wobei das Rohr einen äußeren Durchmesser aufweist, der geringer oder gleich 40 mm ist, und/oder die Wellen eine Breite aufweisen, die geringer oder gleich 3 mm ist, **dadurch gekennzeichnet, dass** die Vertiefung (2) pro Welle (20) zwei Absaugschlitze (21, 22) enthält, die mit der Vakuumleitung verbunden sind und sich unterhalb des Scheitelpunkts der Welle befinden.

2. Kokille (1) gemäß Anspruch 1, **dadurch gekennzeichnet, dass** die Absaugschlitze (21, 22) beiderseits der Symmetrieebene der Welle (20) angeordnet sind.

3. Kokille gemäß einem der Ansprüche 1 oder 2, **dadurch gekennzeichnet, dass** die beiden Absaugschlitze (21, 22) in zwei einseitig geschlossene Längsrillen (3, 4) münden, die sich beiderseits der Vertiefung (2) befinden, wobei die einseitig geschlossenen Rillen in eine Hohlkehle (5) münden, die sich auf einer transversalen Seite (1e) der Kokille (1) befindet.

4. Druckgeformtes Wellrohr, welches einen äußeren Durchmesser, der geringer oder gleich 40 mm ist, und/oder Wellen mit einer Breite, die geringer oder gleich 3 mm ist, aufweist, **dadurch gekennzeichnet, dass** die äußere Oberfläche jeder Welle zwei Spuren (T1, T2) aufweist, die jeweils einem Absaugschlitz entsprechen und sich unterhalb des Scheitelpunkts der Welle befinden.

5. Wellrohr gemäß Anspruch 4, **dadurch gekennzeichnet, dass** sich die Spuren (T1, T2) beiderseits des Scheitelpunkts der Welle befinden.

6. Wellrohr gemäß einem der Ansprüche 4 oder 5, **dadurch gekennzeichnet, dass** es eine einfache Wandung aufweist.

7. Wellrohr gemäß einem der Ansprüche 4 bis 6, **dadurch gekennzeichnet, dass** es aus PVC ist.

8. Wellrohr gemäß einem der Ansprüche 4 bis 7, **dadurch gekennzeichnet, dass** es wenigstens eine Leitung oder eine Röhre einschließt.

9. Verfahren zur Herstellung unter Druck eines Wellrohrs, welches einen äußeren Durchmesser, der geringer oder gleich 40 mm ist, und/oder Wellen mit einer Breite, die geringer oder gleich 3 mm ist, aufweist, **dadurch gekennzeichnet, dass** man in einer Vorrichtung, welche zwei Kokillen-Endlosketten und eine Vakuumleitung umfasst, Kokillen gemäß einem der Ansprüche 1 bis 3 verwendet.

10. Verfahren gemäß Anspruch 9, **dadurch gekennzeichnet, dass** bei der Herstellung des Wellrohrs in dieses wenigstens eine Röhre oder eine Leitung eingefügt wird.
